Europäisches Patentamt

European Patent Office

Office européen des brevets

(19)

(11) Veröffentlichungsnummer: **0 036 468 B2**

## (12) NEUE EUROPÄISCHE PATENTSCHRIFT

(45) Veröffentlichungstag der neuen Patentschrift:
**07.01.87**

(21) Anmeldenummer: **81100288.0**

(22) Anmeldetag: **16.01.81**

(51) Int. Cl.⁴: **C 09 D 5/34**, E 06 B 1/52,
E 04 B 5/00, C 09 K 3/10

(54) Verwendung eines Materials auf der Basis einer Kunststoffdispersion zum Auffrischen und/oder Umfärben, sowie zum Konservieren der Fugen von glatten, nicht saugfähigen Kachel- oder Fliesenbelägen aller Art.

(30) Priorität: **21.03.80 DE 3010863**

(43) Veröffentlichungstag der Anmeldung:
**30.09.81 Patentblatt 81/39**

(45) Bekanntmachung des Hinweises auf die Patenterteilung:
**14.03.84 Patentblatt 84/11**

(45) Bekanntmachung des Hinweises auf die Entscheidung über den Einspruch:
**07.01.87 Patentblatt 87/2**

(84) Benannte Vertragsstaaten:
**AT BE CH DE FR GB IT LI LU NL SE**

(73) Patentinhaber: **MC-Bauchemie Müller GmbH & Co., Steinberg 5, D-4300 Essen-Bredeney (DE)**

(72) Erfinder: **Schwederski, Reinhard, Eichenstrasse 4, D-4716 Olfen (DE)**
Erfinder: **Depke, Fritz Martin, Dr.rer.nat., Hoher Weg 25, D-4235 Schermbeck (DE)**

(74) Vertreter: **Ullrich, Thurmod, Dr., Patentanwälte Dr. Ullrich-Dr. Hasse-Dr. Franke Gaisbergstrasse 3, D-6900 Heidelberg 1 (DE)**

(56) Entgegenhaltungen:
CH - A - 545 256
FR - A - 901 778
FR - A - 2 309 618
GB - A - 1 018 080

H. Kittel, Lehrbuch der Lacke und Beschichtungen, Verlag W.A. Colomb, Berlin-Oberschwandorf (1976), Band IV, Seite 314
H. Lehmann, Ullmann's Encyclopädie der technischen Chemie, 4. Aufl. (1978) Band 15, Seiten 664 u. 665
H. Warson, The Application of Synthetic Resin Emulsions, E. Benn Ltd., London (1972), Seite 514

(56) Entgegenhaltungen: (Fortsetzung)
E.W. Flick, Water-based Paint Formulations, Noyes Data Corp., New Jersey, London (1975), Seiten 56 and 239

*Die Akte enthält technische Angaben, die nach dem Eingang der Anmeldung eingereicht wurden und die nicht in dieser Patentschrift enthalten sind.*

EP 0 036 468 B2

## Beschreibung

Die Erfindung betrifft die Verwendung eines Materials zum Auffrischen und/oder Umfärben sowie zum Konservieren der Fugen von glatten, nicht saugfähigen Kachel- oder Fliesenbelägen aller Art, von Glasbau- und Mosaikflächen aus einer feinen weicheingestellten wässrigen bzw. wässriglösemittelhaltigen oder lösemittelhaltigen Kunststoff-Dispersion, Füllstoffen, Aufhellern und einer Kombination von Netz- und Dispergiermitteln, Fungiziden und Additiven.

Es ist seit langem üblich, unansehnlich gewordene Fugen von gekachelten und/oder gefliesten Wänden mit feinen Pinselstrichen und/oder sogenannten Fugenrollern o.ä. und mehr oder weniger geeigneten Farben zeitaufwendig nachzustreichen, doch bisher nur mit sehr unterschiedlichem Erfolg, da die Randzonen durch Streichen oder Rollen in der Regel nur unvollkommen oder gar nicht erfasst werden. Zumeist löste sich die Farbe nach kurzer Zeit von der Fugenoberfläche wieder ab oder blieb auf den Kacheln und/oder Fliesen haften, oder liess sich nur mit sehr grossem Aufwand von letzteren wieder entfernen.

So beschreibt die DE-OS 2 750 903 ein Beschichtungsmaterial auf der Basis von wässrigen Emulsionen und/oder Dispersionen und/oder Lösungen filmbildender Bindemittel oder Lösungen filmbildender Bindemittel in gegebenenfalls Wasser enthaltenden organischen Lösungsmitteln, gegebenenfalls mit einem Gehalt an Pigmenten, Extendern, Füllstoffen, Weichmachern, Zusatzstoffen und Additiven, das dadurch gekennzeichnet ist, dass es zusätzlich ein feinteiliges, gummielastisches Pulver enthält. In den folgenden Ansprüchen ist von Gummimehl die Rede.

Aus der DE-AS 2 747 892 ist eine Beschichtungsmasse auf der Grundlage von filmbildenden Weichmachern, Pigmenten, Füllstoffen, Schaumstoffgranulaten, Additiven und gegebenenfalls Zusatzmitteln bekannt, die dadurch gekennzeichnet ist, dass sie auf 100 Gewichtsteile des Trockengewichts der filmbildenden wässrigen Dispersion übliche Zusätze in Form von 20–50 Gew.% farbgebende Pigmente, 30–70 Gew.-% organische und/oder anorganische Fasern, 50–90 Gew.% mikroporöse Stoffe, 20–50 Gew.-% Schaumstoffgranulate, 0–100 Gew.-% Füllstoffe eindispergiert enthält. Diese Masse ist zum Beschichten von Wänden oder als Schlussschicht von Bauelementen vorgesehen.

Die DE-OS 2 227 188 betrifft eine Beschichtungsmasse aus 10–40% Kaliumsilikat, 10–30% Kunstharzdispersion, 2–10% Aluminiumsilikat, 10–50% Siliciumdioxid und Wasser.

Schliesslich ist aus der DE-OS 2 531 820 eine Klebe-, Dichtungs- und Spachtelmasse auf der Grundlage filmbildender wässriger Dispersionen und gegebenenfalls üblicher Weichmacher, Pigmente, Füllstoffe, farbgebender Substanzen, Additive und Zusatzmittel bekannt, die dadurch gekennzeichnet ist, dass die Dispersion zusätzlich feinteilige Schaumstoffgranulate enthält.

Aus der DE-AS 2 618 477 ist eine Beschichtungsmasse bekannt, die selektiv auf bestimmten Unterlagen haftet und nach dem Härten eine nichtporöse verfärbungsbeständige abwaschbare Schicht bildet, enthaltend ein Polymer in Form einer Emulsion, ein durch Alkalien eindickbares Polymer zur beträchtlichen Erhöhung der Viskosität der Masse bei Erhöhung des pH-Wertes über den Neutralpunkt, einen basischen Stoff, Wasser und gegebenenfalls Lösungsmittel, Pigmente, Füllmittel, Weichmacher, Mikrobiocide, wobei die Polymeren bei Raumtemperatur härtbar sind und zumindest eines dieser Polymeren in Gegenwart von mehrwertigen Kationen destabilisiert wird und der Gesamtanteil an Polymerfeststoffen 5–60 Gew.% und der Anteil an flüchtigen Substanzen zumindest 20 Gew.% ausmacht und bei thixotropem Verhalten die Viskosität bei 21°C zumindest 50 000 cP ist. Durch den Gehalt der bekannten Beschichtungsmasse an Alkalien haften dieser erhebliche anwendungstechnische Mängel in bezug auf die Verarbeitung an.

Die bekannten und auf dem Markt befindlichen Materialien, bei denen es sich um Beschichtungs- oder Spachtelmassen irgendwelcher Art handelt, sind für die vorliegenden Zwecke nicht geeignet, da es bloss Verfugungsmassen sind, die meist auf den glatten Fliesenoberflächen haften und ankleben und nur schwer wieder zu entfernen sind. Diese Massen müssen mit Pinsel, Spachtel, Rollrädchen od. dgl. verarbeitet werden.

Die Aufgabe der vorliegenden Erfindung besteht nun darin, die Verwendung eines Materials vorzuschlagen, mit dem unansehnlich gewordene Fugen von Fliesen- und/oder Kachelwänden auch vom Nichtfachmann sehr einfach und ohne grossen Aufwand wieder aufgefrischt oder umgefärbt werden können, derart, dass der ursprüngliche optische Eindruck wieder hergestellt wird. Ausserdem lassen sich alte eintönige weisse und graue Fugen auf die neuen moderneren sanitären keramischen Ausstattungen, beispielsweise von Bad und Küche, umtönen und/oder anpassen, was bisher so ohne weiteres nicht möglich war.

Die Lösung dieser Aufgabe wird durch die technische Lehre vermittelt, dass man ein Material verwendet, das aus

20–35% einer Kunststoff-Dispersion auf der Basis von Styrol- und Reinacrylat, PVC-Mischpolymerisat, Polyvinyl-Propionat und/oder terpolymerer Polyvinylester bzw. Kunstkautschuk,

25–50% Kreide,

4–10% Magnesium-Silikat-Hydrat und/oder Naturglimmer,

5–15% Titandioxyd, Eisenoxyd, schwarz, gelb, braun oder rot, Chromdioxyd grün als feinteiliges alkaliresistentes licht- und farbechtes Pigment und

14–28% einer wässrigen Mischung von Netz- und Dispergiermitteln sowie Entschäumer, Verdickungsmittel und Wachsdispersionen besteht und

dieses mit Hilfe eines geeigneten Werkzeugs wie z.B. Schwamm, Pinsel, Quast, Lappen, Fell, Bürste oder durch Sprühen und Spritzen gut deckend auf die gereinigte, fettfreie und abgetrocknete Fuge aufgetragen wird, in der es schneller trocknet und besser haftet als auf der nicht saugfähigen Fliesenoberfläche, ohne dass dabei darauf geachtet werden muss, ob Material auf die neben den Fugen liegende Fliesenoberfläche gelangt und es nach dem Antrocknen, was leicht durch Mattwerden der Oberfläche erkannt wird und je nach Temperatur, relativer Luftfeuchtigkeit und Luftbewegung unterschiedliche Zeit in Anspruch nimmt, mit einem geeigneten Werkzeug, z.B. einem harten Schwamm, einem Topfschwamm, einem geeigneten maschinengetriebenen Schleifteller oder ähnlichem, nass von den nichtsaugenden Fliesen leicht reibt, ohne dass es dabei von den Fugen entfernt wird, da zu diesem Zeitpunkt bereits eine gute Haftung des Materials auf dem rauhen und saugfähigen Fugenuntergrund vorhanden ist.

Die beanspruchte Verwendung stellt eine Auswahlerfindung dar, denn, wie der Stand der Technik zeigt, sind derartige Massen zum Verfugen, Beschichten, Verstreichen usw. in grosser Zahl bekannt; sie weisen aber nicht die beanspruchte Zusammensetzung auf und es war auch nicht bekannt, aus der Vielzahl dieser Zusammensetzungen eine solche Kombination auszuwählen, die zu einer völlig unerwarteten Wirkung führt, nämlich das Auffrischen, Umfärben und Konservieren der Fugen. Die Lösung einer solchen Aufgabe, aus bekannten Stoffen eine für einen besonderen Zweck geeignete Zusammensetzung oder Kombination zu verwenden, ist patentfähig, wenn die Erfindungshöhe gegeben ist. Die erfindungsgemässe Verwendung weist grosse Vorteile gegenüber den bekannten Materialien auf, die für die vorgesehenen Zwecke unbrauchbar sind. Die Tatsache des Bekanntseins vieler Kombinationen und Zusammensetzungen, aber deren Nichtanwendbarkeit auf dem in Frage stehenden Gebiet, um zu einem Material mit besonderen Eigenschaften zu gelangen, spricht für das Vorliegen eines erheblichen Masses an Erfindungshöhe.

Bei der Verarbeitung des Materials zum Auffrischen und/oder Umfärben oder Konserviern der Fugen geht man beispielsweise zweckmässig so vor, dass man es zunächst mit einem der Pakkung beigefügten weichen bis mittelharten, feinporigen Schwamm grosszügig deckend auf die aufzufrischenden oder umzufärbenden Fugen der Kacheln und/oder Fliesen aufträgt. Wenn das aufgetragene Material nicht mehr glänzt und matt wird, ist der Trocknungsprozess beendet. Nun wird die gesamte Fläche in kreisenden Bewegungen beispielsweise mit dem ebenfalls beigefügten rauhen Schwamm nass abgerieben. Dabei wird das Material von den Fliesen leicht entfernt und haftet nur noch fest in den Fugen. Dabei lässt sich das Material aufgrund einer speziellen chemischen Zusammensetzung sehr leicht und einfach von den Fliesen und/oder Kacheln entfernen und haftet optimal, auch an den Randzonen, fest und gut deckend auf den Mörtelfugen. Anschliessend werden in üblicher Weise die Fliesen und/oder Kacheln usw. mit einem Haushaltstuch gereinigt.

Die unansehnlich gewordenen, aber sonst noch intakten Mörtelfugen von Fliesen- und/oder Kacheloberflächen in Wohnungen (Küche, Bad, usw.), Badeanstalten (Duschräumen usw.) und Gewerberäumen (Schlachtereien, Molkereien, Brauereien, Werkstätten usw.) können so auf einfache Weise mit nur sehr geringem Aufwand wieder aufgefrischt und/oder umgefärbt werden; auch mit feinen Schwindrissen kleiner als 0,2 mm durchsetzte Fugen werden einwandfrei überdeckt und abgedichtet. Das Material besitzt nach dem Auftrocknen darüber hinaus eine hohe Deckkraft, gute Kreidungsbeständigkeit und Scheuerfestigkeit. Die Zusammensetzung des Fugenauffrischungsmaterials ist so gewählt, dass nur stärkere Fett-, Seifen- und Schmutzrückstände vorher mit handelsüblichen chemisch und physikalisch wirkenden Reinigungsmitteln zu entfernen sind.

Das aufgetragene Material trocknet und haftet schneller und besser in den Mörtelfugen als auf der Kacheloberfläche, so dass nach dem Antrocknen, was dadurch deutlich erkennbar ist, dass das Material matt wird, dasselbe von den Kacheln abgerieben werden kann, gleich mit welchem der vorgenannten Werkzeuge, ohne dass es dabei von der Fuge entfernt wird, da zu diesem Zeitpunkt bereits eine gute Haftung am Fugenuntergrund gegeben ist.

Sollten hier und da einmal kleinere Fehlstellen auftauchen, so kann der gesamte Vorgang an diesen Stellen ohne Beeinträchtigung der bereits instandgesetzten Fliesen- und/oder Kachelfugen wiederholt werden.

Alte, schadhaft gewordene Mörtelfugen sind vor Anwendung des Fugenauffrischungs-Materials mit handelsüblichen Schnellbindezement o.ä. auszubessern.

Im allgemeinen genügt es, wenn vor Anwendung des Fugenauffrischungs-Materials nur dikkere Fett-, Seifen- und Schmutzrückstände von den zu behandelnden Fugen- und Kachelflächen mit geeigneten Reinigungsmitteln entfernt werden.

Das Fugenauffrischungs-Material lässt sich mit besonders feinteiligen alkaliresistenten, licht- und farbechten Pigmenten in den gewünschten Farbtönen herstellen.

## Patentanspruch

Verwendung eines Materials mit einer Zusammensetzung aus

20–35% einer Kunststoff-Dispersion auf der Basis von Styrol- und Reinacrylat, PVC-Mischpolymerisat, Polyvinyl-Propionat und/oder terpolymerer Polyvinylester bzw. Kunstkautschuk,

25–50% Kreide,

4–10% Magnesium-Silikat-Hydrat und/oder Naturglimmer,

5-15% Titandioxyd, Eisenoxyd, schwarz, gelb, braun oder rot, Chromdioxyd grün als feinteiliges alkaliresistentes licht- und farbechtes Pigment und

14-28% einer wässrigen Mischung von Netz- und Dispergiermitteln sowie Entschäumer, Verdickungsmittel und Wachsdispersionen

zum Auffrischen und/oder Umfärben sowie zum Konservieren der Fugen von glatten, nicht saugfähigen Kachel- oder Fliesenbelägen aller Art, von Glasbau- und Mosaikflächen, dadurch gekennzeichnet, dass es mit Hilfe eines geeigneten Werkzeugs wie z.B. Schwamm, Pinsel, Quast, Lappen, Fell, Bürste oder durch Sprühen und Spritzen gut deckend auf die gereinigte, fettfreie und abgetrocknete Fuge aufgetragen wird, in der es schneller trocknet und besser haftet als auf der nicht saugfähigen Fliesenoberfläche, ohne dass dabei auf die Reinhaltung der Fliesenoberfläche geachtet werden muss, und es nach dem Antrocknen, was leicht durch Mattwerden der Oberfläche erkannt wird und je nach Temperatur, relativer Luftfeuchtigkeit und Luftbewegung unterschiedliche Zeit in Anspruch nimmt, mit einem geeigneten Werkzeug wie z.B. einem harten Schwamm, einem Topfschwamm, einem geeigneten maschinengetriebenen Schleifteller oder ähnlichem nass von den nichtsaugenden Fliesen leicht abgerieben wird, ohne dass es dabei von den Fugen entfernt wird, da zu diesem Zeitpunkt bereits eine gute Haftung des Materials auf dem rauhen und saugfähigen Fugenuntergrund vorhanden ist.

## Claim

The use of a material with a composition of

20-35% of a plastic dispersion based on styrene acrylate and pure acrylate, PVC copolymer, polyvinyl propionate and/or terpolymer polyvinyl ester or synthetic rubber;
25-50% chalk;
4-10% magnesium silicate hydrate and/or natural mica;
5-15% titanium dioxide, iron oxide, black, yellow, brown or red, chromium dioxide green in the form of a particulate alkali-resistant light-fast and non-fading pigment, and
14-28% of an aqueous mixture of wetting and dispersion agents as well as defoaming agents, thickening agents and wax dispersions

for refreshing and/or changing a colour as well as for preserving the joints in smooth non-porous coverings made of tilings or pavings of any kind, glass structural surfaces and mosaic surfaces, characterized in that it is applied to the cleaned, grease-free and dried joints in a manner such that it covers well by means of a suitable tool, such as, for example, a sponge, a paintbrush, a wall brush, a cloth, a skin, or by spraying and injection, in which joints it dries more rapidly and adheres better than on the non-porous paving surface, without attention having to be paid to the paving being kept clean, and, after drying – which can easily be seen from the surface becoming matte and takes a varying amount of time depending upon the temperature, the relative atmospheric moisture and the air movement – the material is easily rubbed off wet from the non-porous pavings by means of a suitable tool, such as, for example, a hard sponge, a pot sponge, a suitable machine-driven grinding disc or the like, without it being removed from the joints, since at this moment there is already a good adhesion of the material on the rough and porous substratum of the joints.

## Revendication

Application d'un matériau de la composition suivante

20-35% d'une dispersion de matière plastique à base d'acrylate de styrène et d'acrylate pur, d'un polymère de mélange de PVC, de propionate de polyvinyle et/ou d'ester de polyvinyle terpolymérisé ou bien de caoutchouc synthétique,
25-50% de craie,
4-10% d'hydrate de silicate de magnésium et/ou de mica naturel,
5-15% de dioxyde de titane, d'oxyde de fer, noir, jaune, brun ou rouge, de dioxyde de chrome vert en tant que pigment teint finement divisé résistant aux alcalis et à la lumière,
14-28% d'un mélange aqueux d'agent mouillant et dispersant ainsi que d'agent anti-moussant, d'épaississant et de dispersions de cires

pour rafraîchir et/ou pour recolorer ainsi que pour conserver des joints de revêtement lisses non absorbants en carreaux de faïence ou de céramique de tout type, de surfaces en carreaux de verre et en mosaïque, application caractérisée en ce qu'elle est déposée à l'aide d'un instrument approprié tel que par exemple une éponge, un pinceau, un pinceau large, un chiffon, une peau, des brosses ou bien par pulvérisation et projection, avec un bon recouvrement sur les joints nettoyés, dégraissés et séchés, sur lesquels elle sèche rapidement et adhère mieux que sur la surface non absorbante des carreaux, sans qu'il y ait alors lieu de veiller à ne pas souiller la surface des carreaux, et après le séchage que l'on constate facilement du fait que la surface devient mâte et qui demande un temps variable selon la température, l'humidité relative et la circulation d'air, cette application peut être enlevée facilement des carreaux non absorbants en frottant en présence d'eau avec un instrument approprié tel que par exemple une éponge dure, une éponge en boisseau, un disque de ponçage entraîné par une machine, ou un instrument analogue sans que l'application soit alors enlevée des joints, car à ce moment une bonne adhérence du matériau sur le fond rugueux et absorbant des joints est déjà obtenue.